# EUROPÄISCHE PATENTSCHRIFT

(11) **EP 2 449 654 B1**
(45) Veröffentlichungstag und Bekanntmachung des Hinweises auf die Patenterteilung: **25.06.2014**
(21) Anmeldenummer: 10718583.7
(22) Anmeldetag: 06.05.2010
(51) Int. Cl.: H02K 1/27

(54) **LÄUFER UND VERFAHREN ZUR HERSTELLUNG EINES LÄUFERS EINER ELEKTRISCHEN MASCHINE**
ROTOR AND METHOD FOR MANUFACTURING A ROTOR OF AN ELECTRIC MACHINE
ROTOR ET PROCÉDÉ DE FABRICATION D'UN ROTOR D'UNE MACHINE ÉLECTRIQUE

(30) Priorität: 01.07.2009 DE 102009031371
(43) Veröffentlichungstag der Anmeldung: 09.05.2012
(73) Patentinhaber: Siemens Aktiengesellschaft, 80333 München (DE)
(72) Erfinder: BAYER, Heiner, 82140 Olching (DE); ERD, Ludwig, 10559 Berlin (DE); HARTMANN, Ulrich, 14197 Berlin (DE); METZNER, Torsten, 13591 Berlin (DE); MÖHLE, Axel, 12163 Berlin (DE)
(86) Internationale Anmeldenummer: PCT/EP2010/056182
(87) Internationale Veröffentlichungsnummer: WO 2011/000617

(56) Entgegenhaltungen:
- EP-A2- 1 427 088
- WO-A1-02/103882
- DE-A1-102005 032 721

## Beschreibung

Die Erfindung betrifft ein Verfahren zur Herstellung eines Läufers einer elektrischen Maschine. Weiterhin betrifft die Erfindung einen diesbezüglichen Läufer für eine elektrische Maschine.

Bei vielen elektrischen Maschinen, wie z.B. Elektromotoren oder Generatoren, weist der sich bewegende Läufer Permanentmagnete auf, die am Joch des Läufers montiert werden müssen, da eine nachträgliche Magnetisierung der Permanentmagnete meist nicht möglich ist. Ferner ist häufig, abhängig von den Betriebsbedingungen, ein Schutz der Permanentmagnete gegenüber Umweltbedingungen, wie z.B. Feuchte und aggressive Medien, notwendig. Diese Forderungen stehen im Widerspruch zu einer kostengünstigen rationellen Fertigung, insbesondere bei hohen Stückzahlen.

Aus dem Stand der Technik ist bei Läutern das Verkleben der Permanentmagnete mit zusätzlichen Bandagen als Sicherung gegen Ablösen vom Joch des Läufers und Schutz vor Umwelteinflüssen bekannt. Dabei wird der Läufer mit Bandagen umwickelt. Nach dem Umwickeln des Läufers werden die Bandagen mit einem Harz durchtränkt, der dann aushärtet. Durch die Bandagen in Verbindung mit dem Harz wird eine mechanisch belastbare Befestigung der Permanentmagnete am Joch erreicht.

Weiter ist das Verkleben/Vergießen der Permanentmagnete in Hauben und das Befestigen der Hauben auf Trägerplatten, sowie das Befestigen der Trägerplatte mit dem Joch des Läufers bekannt. In axialer Richtung des Jochs werden dabei mehrere Trägerplatten hintereinander angeordnet. Die einzelnen Befestigungen werden dabei mittels kraft und/oder formschlüssige Verbindungen realisiert.

Weiterhin ist es insbesondere bei kleineren Maschinen bekannt, die Permanentmagnete in Taschen innerhalb des Jochs des Läufers anzuordnen, in die die Permanentmagnete eingeschoben und verklebt werden. Die eigentliche Kraft tragende Befestigung der Permanentmagnete ist dabei durch die Form der Tasche realisierte formschlüssige Verbindung realisiert. Die Klebeverbindung dient lediglich dazu, eine Verschiebung der Permanentmagnete in axiale Richtung innerhalb der Taschen zu verhindern.

Aus der DE 10 2004 062 753 ist ein Lacksystem beschrieben, das in nicht ausgehärtetem Zustand als Montageklebstoff für Permanentmagnete verwendet werden kann. Dabei werden sehr spezielle Montageprozeduren und Temperaturerhöhungen benötigt.

Aus der DE 10 2004 058 451 ist ein Verfahren zur Herstellung von Magnetsystemen und danach hergestellte Magnetsysteme bekannt, bei denen Permanentmagnete untereinander und/oder mit anderen Werkstücken verklebt werden.

Aus der DE 198 200 33 ist ein Klebeverfahren zur Herstellung von Dauermagneten bekannt.

Weiterhin ist aus einer Veröffentlichung der Firma LOCTITE, das Verkleben von Permanentmagneten mit unterschiedlichsten Klebstoffen bekannt.

Aus der DE 10 2005 032 721 A1 ist ein Blockmagnet mit Korrosionsschutz bekannt. In dieser Druckschrift wird um die Korrosion von Blockmagneten zu vermeiden ein Blockmagnet offenbart, der durch Einzelmagnete aufgebaut ist, wobei jeder Einzelmagnet einen Korrosionsschutz aufweist und die Einzelmagnete verklebt den Blockmagnet ergeben. Die Blockmagnete sind insbesondere bei elektrischen Maschinen einsetzbar.

Es ist Aufgabe der Erfindung, eine rationelle Herstellung eines mit Permanentmagneten bestückten Läufers einer Maschine zu ermöglichen, wobei die Permanentmagnete mit hoher Zuverlässigkeit stoffschlüssig am Joch des Läufers befestigt sind.

Diese Aufgabe wird gelöst durch ein Verfahren zur Herstellung eines Läufers für eine elektrische Maschine nach Anspruch 1. Dadurch, dass das Joch an der Stelle, an der das Magnetelement mit dem Joch verklebt wird, eine weiche und elastische Schicht aufweist, kann die Dicke der Klebeschicht des zweiten Klebstoffs reduziert werden und somit die Zeit bis zum Aushärten des zweiten Klebstoffs verkürzt werden, was eine besonders schnelle Herstellung des Läufers ermöglicht.

Weiterhin wird diese Aufgabe gelöst durch einen Läufer für eine elektrische Maschine nach Anspruch 10.

Es sei dabei ausdrücklich angemerkt, dass bei der Erfindung die Magnetelemente und insbesondere die Permanentmagnete ausschließlich über eine Klebeverbindung, mittels des zweiten Klebstoffs mit dem Joch, insbesondere mit der Oberfläche des Jochs, verbunden sind. Die Magnetelemente und insbesondere die Permanentmagnete sind ausschließlich mittels des zweiten Klebstoffs am Joch befestigt. An der erfindungsgemäßen Befestigung der Magnetelemente und insbesondere der Permanentmagnete am Joch sind somit keine form- und/oder kraftschlüssigen Verbindungen zur Realisierung der Befestigung beteiligt. Es sein dabei angemerkt, dass die von den Permanentmagneten erzeugte magnetische Anziehungskraft auf das Joch keine Befestigung oder Verbindung mit dem Joch im Sinne der Erfindung darstellt.

Vorteilhafte Ausbildungen des Verfahrens ergeben sich aus den abhängigen Ansprüchen. Vorteilhafte Ausbildungen des Läufers ergeben sich analog zu den vorteilhaften Ausbildungen des Verfahrens und umgekehrt.

Es erweist sich als vorteilhaft, wenn der erste Klebstoff ein schnell aushärtender Klebstoff ist, da dann die Magnetelemente besonders schnell gefertigt werden können.

Es erweist sich als vorteilhaft, wenn der zweite Klebstoff als Silikon-Klebstoff ausgebildet ist. Ein Silikon-Klebstoff ist einfach zu verarbeiten und ist im ausgehärteten Zustand elastisch und weich. Silikon-Klebstoffe werden allgemein auch als Dichtmittel verwendet.

Ferner erweist es sich als vorteilhaft, wenn die Dicke der Klebeschicht zwischen Unterseite des Magnetelements und dem Joch 0,4 mm bis 4 mm beträgt. Bei einer Dicke der Klebeschicht zwischen Unterseite des Magnetelements und dem Joch von 0,4 mm bis 4 mm kann sich das Magnetelement gegenüber dem Joch in einem hohen Maße bei einer Temperatursteigerung unterschiedlich ausdehnen, ohne dass es zu einem Reißen des zweiten Klebstoffs oder dem Magnetmaterial oder zu Ablösungen kommt.

Ferner erweist es sich als vorteilhaft, wenn nach Durchführung des Verfahrensschritts a) eine Kappe mittels des zweiten Klebstoffs mit der Oberseite des Magnetelements verklebt wird, wobei die Kappe Seitenteile aufweist, die mittels des zweiten Klebstoffs mit den Seitenflächen des Magnetelements verklebt werden. Durch diese Maßnahme kann erreicht werden, dass das Magnetelement vollständig vom zweiten Klebstoff umhüllt wird und somit die Permanentmagnete vor schädigenden Umwelteinflüssen, wie z.B. in den Läufer eindringende Feuchte oder aggressive Medien, zuverlässig geschützt werden.

Ferner erweist es sich als vorteilhaft, wenn der Läufer als Außenläufer ausgebildet ist und das Magnetelement auf der Innenseite des Jochs angeordnet ist. Eine solche Anordnung stellt bei Außenläufern eine übliche Anordnung des Magnetelements dar.

Weiterhin erweist es sich als vorteilhaft, wenn das Joch, an der Stelle, an der das Magnetelement mit dem Joch verklebt wird, eine Ausnehmung zur Aufnahme des Magnetelements aufweist. Das Magnetelement kann dann besonderes einfach platziert werden.

Ferner erweist es sich als vorteilhaft, wenn die Ausnehmung mindestens zwei Stufen aufweist. Durch eine Ausbildung der Ausnehmung als zweistufige Ausnehmung kann eine besonders einfache und schnelle Fertigung des Läufers durchgeführt werden und auf einfache Art und Weise eine konstante Dicke der Klebeschicht zwischen Magnetelement und Joch erzielt werden

Ferner erweist es sich als vorteilhaft, wenn der erste und der zweite Klebstoff bei Raumtemperatur aushärten. Hierdurch ist eine besonders einfache und folglich rationelle Fertigung des Läufers möglich.

Ferner erweist sich eine elektrische Maschine, die den erfindungsgemäßen Läufer aufweist, als vorteilhaft. Die elektrische Maschine ist üblicherweise als Generator oder Elektromotor ausgebildet, wobei bei einer Ausbildung der elektrischen Maschine als Generator, die elektrische Maschine z.B. als Windkraftgenerator ausgebildet sein kann.

Zwei Ausführungsbeispiele der Erfindung sind in der Zeichnung dargestellt und werden im Folgenden näher erläutert. Dabei zeigen:
- FIG 1: eine perspektivische Darstellung eines Permanentmagneten,
- FIG 2: eine schematisierte Schnittansicht eines Magnetelements,
- FIG 3: eine schematisierte Schnittansicht eines mit einer Kappe versehenen Magnetelements,
- FIG 4: eine schematisierte Schnittansicht eines mit einer Kappe versehenen Magnetelements in einer Ansicht von unten auf das Magnetelement,
- FIG 5: eine Maschine mit einem erfindungsgemäßen Läufer,
- FIG 6: eine schematisierte Detailansicht eines Ausschnitts eines nicht zur Erfindung gehörenden Läufers mit einer Ablegevorrichtung für ein Magnetelement, und
- FIG 7: eine schematisierte Detailansicht eines Ausschnitts des erfindungsgemäßen Läufers mit einer Ablegevorrichtung für ein Magnetelement.

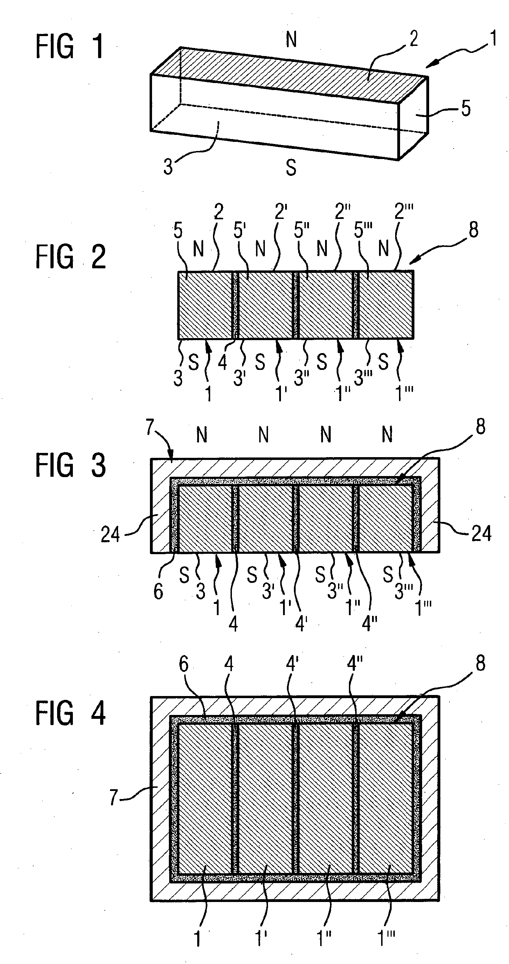

In FIG 1 ist in Form einer perspektivischen Darstellung ein Permanentmagnet 1 dargestellt. Der Permanentmagnet 1 weist einen magnetischen Nordpol und einen magnetischen Südpol auf. Der magnetische Nordpol ist im Rahmen der Darstellung gemäß FIG 1 auf der Oberseite 2 des Permanentmagneten 1 angeordnet, d.h. die Magnetfeldlinien treten auf der Oberseite 2 aus dem Permanentmagneten 1 heraus und der magnetische Südpol ist auf der Unterseite 3 des Permanentmagneten 1 angeordnet, d.h. die magnetischen Feldlinien treten in die Unterseite 3 des Permanentmagneten 1 ein. Solchermaßen weist der Permanentmagnet 1 eine Seite mit einem magnetischen Nordpol und eine Seite mit einem magnetischen Südpol auf, wobei die beiden Seiten einander gegenüberliegend angeordnet sind. Weiterhin weist der Permanentmagnet 1 eine Stirnseite 5 auf.

Im Rahmen eines ersten Verfahrensschritts zur Herstellung eines Läufers einer elektrischen Maschine wird ein Magnetelement 8, das in FIG 2 im Rahmen einer schematisierten Schnittansicht dargestellt ist, aus mehreren von den in FIG 1 dargestellten Permanentmagneten hergestellt. Die Herstellung des Magnetelements 8 erfolgt dabei durch Aneinanderkleben der Permanentmagnete 1, 1', 1" und 1"' mittels eines ersten Klebstoffs, wobei die Permanentmagnete derart im Rahmen des Ausführungsbeispiels beim Verkleben angeordnet werden, dass die Seiten der magnetischen Südpole, d.h. im Ausführungsbeispiel die Unterseiten 3, 3', 3" und 3"' eine gemeinsame Unterseite des Magnetelements 8 bilden. Alternativ hierzu könnten die Permanentmagnete auch derart beim Verkleben angeordnet werden, dass die Seiten der magnetischen Nordpole eine gemeinsame Unterseite des Magnetelements 8 bilden.

In FIG 2 ist das hierbei entstandene Magnetelement 8 in einer schematisierten Schnittansicht dargestellt, wobei die Stirnseiten 5, 5', 5" und 5"' der einzelnen Magnetelemente in einer Ansicht von vorne auf die Stirnseiten 5, 5', 5" und 5"' dargestellt sind. Zwischen den einzelnen Magnetelementen ist jeweils eine Klebeschicht 4, die aus dem ersten Klebstoff besteht, angeordnet. Es sei dabei angemerkt, dass in FIG 2, sowie in den nachfolgenden Figuren, die Dicke der Klebeschicht 4 vergrößert gegenüber der Realität dargestellt ist.

Der erste Klebstoff ist dabei im ausgehärteten Zustand hart, d.h. er weist eine harte Konsistenz, wie z.B. die Konsistenz eines Spielwürfels aus Plexiglas oder wie z.B. die Konsistenz eines harten Möbellacks oder wie z.B. die Konsistenz eines Plastikgehäuses eines Handys, auf. Da die einzelnen Permanentmagnete 1, 1', 1" und 1"' sich gegenseitig stark abstoßen, wird durch den, nach dem Aushärten harten und damit unelastischen ersten Klebstoff verhindert, dass sich nach dem Aushärten des ersten Klebstoff, die einzelnen Permanentmagnete von einander weg bewegen können, wie dies zumindest in einem geringen Maße bei der Verwendung eines weichen und elastischen Klebstoff der Fall wäre. Um eine besonders schelle und damit besonders rationelle Herstellung des Läufers zu ermöglichen, ist der erste Klebstoff vorzugsweise ein schnell härtender, insbesondere hochfester Klebstoff, so dass die einzelnen Permanentmagnete nur kurzzeitig beim Aushärten bis ein bestimmter Aushärtungsgrad des ersten Klebstoffs erreicht ist, von einer entsprechenden Vorrichtung beim Verkleben zusammengedrückt werden müssen. Wie bereits erwähnt, ist der erste Klebstoff ein schnell aushärtender Klebstoff, d.h. der erste Klebstoff erreicht spätestens nach 5 Minuten, vorzugsweise spätestens nach 2 Minuten, eine Festigkeit, die ausreichend ist, damit die Permanentmagnete trotz ihrer gegenseitigen magnetischen Abstoßungskraft von bis zu 0,5 N pro mm² Klebefläche miteinander verbunden bleiben, wenn die Vorrichtung, die die Permanentmagnete beim Verkleben zusammendrückt, entfernt wird. Die Endfestigkeit des ersten Klebstoffs kann dabei erst nach einigen Stunden erreicht werden. Als erster Klebstoff eignen sich hierbei z.B. der Klebstoff LOCTITE® 648 mit zugehörigem Aktivator des Klebstoffs der Firma LOCTITE oder z.B. der Zwei-Komponenten-No-Mix-Klebstoff Bondmaster® 533 der Firma Bondmaster.

Die beiden genannten Klebstoffe härten dabei bei Raumtemperatur aus, was eine besonders einfache Fertigung erlaubt. Ein Aufwärmen und Abkühlen Permanentmagnete ist somit zum Verkleben nicht notwendig.

Als Ergebnis des ersten Herstellungsschritts erhält man ein Magnetelement 8. Da für einen Läufer mehrere solcher Magnetelemente 8 benötigt werden, wird der erste Schritt vorzugsweise so oft wiederholt, bis alle für den Läufer benötigten Magnetelemente hergestellt sind.

Im Rahmen einer vorteilhaften Ausbildung der Erfindung wird im Rahmen des Ausführungsbeispiels in einem weiteren Schritt eine Kappe 7 mit dem Magnetelement 8 verklebt, was in FIG 3 in einer schematisierten Schnittdarstellung dargestellt ist. Gleiche Elemente sind in FIG 3 mit den gleichen Bezugszeichen versehen wie in FIG 1 und FIG 2.

Die Kappe 7 wird auf die Oberseite des Magnetelements 8 aufgebracht, wobei diese wie in FIG 2 dargestellt durch die Oberseiten 2, 2', 2" und 2"' der einzelnen Permanentmagnete gebildet wird. Die Kappe 7 wird mittels eines zweiten Klebstoffs mit der Oberseite des Magnetelements 8 verklebt. Die Kappe 7 weist nach unten verlaufende Seitenteile 24 auf, die mit dem zweiten Kleber mit den Seitenflächen des Magnetelements 8 verklebt werden. Zwischen der Kappe 7 und dem Magnetelement 8 ist, wie in FIG 2 dargestellt, eine aus dem zweiten Kleber bestehende Klebeschicht 6 angeordnet. Es sei dabei angemerkt, dass in FIG 3, sowie in der nachfolgenden FIG 4, die Dicke der Klebeschicht 6 gegenüber der Realität vergrößert dargestellt ist.

In FIG 4 ist das solchermaßen entstandene Magnetelement 8 in einer schematisierten Schnittansicht von unten auf das Magnetelement 8 dargestellt. Gleiche Elemente sind dabei mit den gleichen Bezugszeichen versehen wie in FIG 2 oder FIG 3.

Bei dem zweiten Klebstoff handelt es sich um einen Klebstoff, der im ausgehärteten Zustand weich und elastisch ist, d.h. eine weiche Konsistenz aufweist und elastisch ist. Der zweite Klebstoff ist dabei vorzugsweise als Silikon-Klebstoff ausgebildet. Als zweiter Klebstoff kann z.B. der Klebstoff DOW CORNING® Q3-3526 mit zugehörigem Katalysator des Klebstoffs der Firma DOW CORNING oder der Klebstoff RT 778/T78 der Firma Wacker verwendet werden.

Als weich und elastisch wird dabei im Rahmen der Erfindung z.B. die übliche Konsistenz eines ausgehärteten Silikon-Klebstoffs verstanden, also die Konsistenz eines Elastomers. Der zweite Klebstoff ist solchermaßen als gummiartiger Stoff ausgebildet.

Die wegen der verwendeten unterschiedlichen Materialien der Kappe 7 und der Permanentmagnete bei Erwärmung auftretenden unterschiedlichen Ausdehnungen des Magnetelements und des Jochs werden durch den zweiten Klebstoff ausgeglichen, so dass die Kappe 7 ihre Form auch z.B. bei einer Temperaturerhöhung des Magnetelements 8 beibehält.

Die Klebeschicht 6 und die Kappe 7 bilden einen wirkungsvollen Schutz der Permanentmagnete vor in den Läufer eindringende Feuchtigkeit oder gegen aggressive Medien, wie z.B. aggressive Gase.

Es sei an dieser Stelle angemerkt, dass nachfolgend auch das mit der Kappe versehene Magnetelement nur noch als Magnetelement bezeichnet wird und mit dem Bezugszeichen "8" versehen ist.

Die Fertigung der Magnetelemente, wie in den Figuren 1 bis 4 beschrieben, kann dabei bereits im Vorfeld vor der eigentlichen Bestückung des Jochs des Läufers mit den Magnetelementen erfolgen, so dass die Magnetelemente, die für die Herstellung des Läufers benötigt werden, bereits beim Aufbringen der Magnetelemente auf das Joch des Läufers alle vorhanden sind, d.h. zur Verfügung stehen, was eine besonders rationelle Herstellung des Läufers ermöglicht.

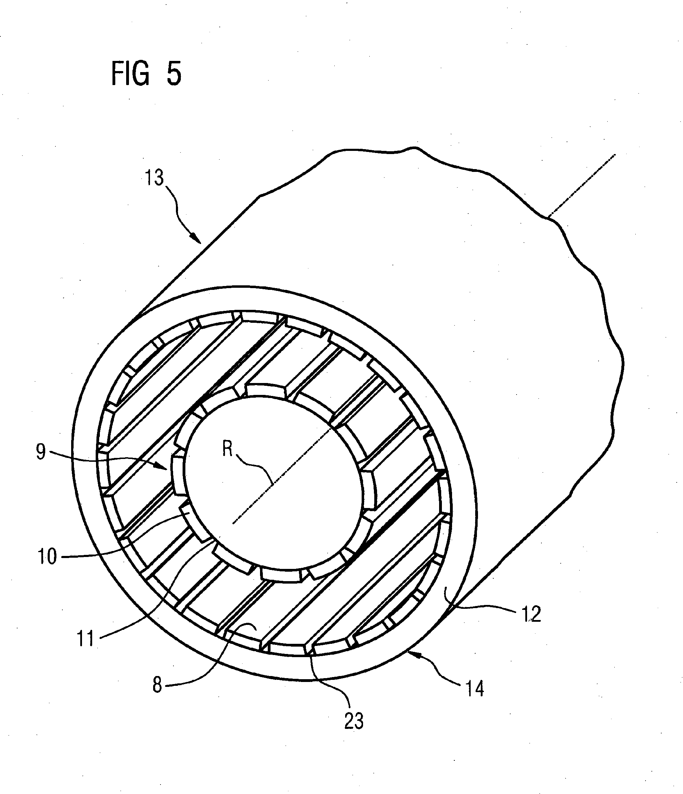

In FIG 5 ist in Form einer schematisierten perspektivischen Darstellung eine Maschine 13 dargestellt, die z.B. als Elektromotor oder Generator ausgebildet sein kann.

Die Maschine 13 weist einen umbeweglich angeordneten Ständer 9 auf, der auf einem Ständerträger 11 angeordnete Wicklungen 10 aufweist, wobei der Übersichtlichkeit halber nur eine Wicklung 10 mit einem Bezugszeichen versehen ist. Die Wicklungen sind dabei, im Rahmen der schematisierten Darstellung gemäß FIG 5, nur symbolisch in Form von rechteckigen Kästen dargestellt.

Um den Ständer 9 ist ein erfindungsgemäßer Läufer 14 gegenüber dem Ständer 9 rotierbar angeordnet. Der Läufer 14 rotiert dabei um die Rotationsachse R. Der Läufer 14 weist als wesentliches Element ein Joch 12 aus einem vorzugsweise weichmagnetischen Material auf, wobei das Joch massiv ausgebildet sein kann oder aber auch mehrere in Richtung der Rotationsachse R hintereinander angeordnete Bleche aufweisen kann. Gegebenenfalls kann das Joch als Bestandteil des Joch noch Anbauelemente aufweisen. Die Bleche sind dabei gegeneinander elektrisch isoliert angeordnet. Weiterhin weist der Läufer 14 als wesentliche Elemente noch die vorhergehend beschriebenen Magnetelemente auf, wobei der Übersichtlichkeit halber in FIG 5 nur ein Magnetelement 8 mit einem Bezugszeichen versehen ist. Im Rahmen des Ausführungsbeispiels sind dabei die Magnetelemente an der Innenseite 23 des Jochs 12 angeordnet, wobei der Läufer als Außenläufer ausgebildet ist, d.h. der Ständer sich im Inneren befindet, und der Läufer um den Ständer herum angeordnet ist.

Bei einer Ausführungsform der Maschine 13, bei der der Läufer 14 als Innenläufer ausgebildet ist, d.h. der Läufer sich im Inneren befindet, und der Ständer um den Läufer herum angeordnet ist, können die Permanentmagnete auch auf der Außenseite des Jochs angeordnet sein.

Zur Herstellung des Läufers 14 wird das Magnetelement 8 und im Nachfolgenden auch die anderen Magnetelemente mit dem Joch 12 verbunden. Dies erfolgt erfindungsgemäß über ein Verkleben der Unterseite des Magnetelements 8 mit dem Joch, insbesondere mit der Oberfläche des Jochs mittels des zweiten Klebstoffs. Da der zweite Klebstoff, wie bereits erwähnt, in ausgehärtetem Zustand eine weiche und elastische Konsistenz aufweist, führen bei einer Temperaturerhöhung auftretende unterschiedliche Ausdehnungen des Magnetelements 8 und des Jochs 12, das üblicherweise aus einem eisenhaltigen Metall gefertigt ist, nicht zum Aufreißen des zweiten Klebstoffs. Um die unterschiedlichen Temperaturausdehnungen zwischen den Permanentmagneten des Magnetelements 8 und dem Joch 12 optimal auszugleichen, beträgt die Dicke der Klebeschicht aus dem zweiten Klebstoff zwischen der Unterseite des Magnetelements und dem Joch vorzugsweise 0,4 mm bis 4 mm. Insbesondere bei dieser Dicke der Klebeschicht kommt es einerseits zu keiner Rissbildung in der Klebeschicht und andererseits ist noch eine für die Herstellung des Läufers akzeptable Aushärtezeit des zweiten Klebstoffs gewährleistet.

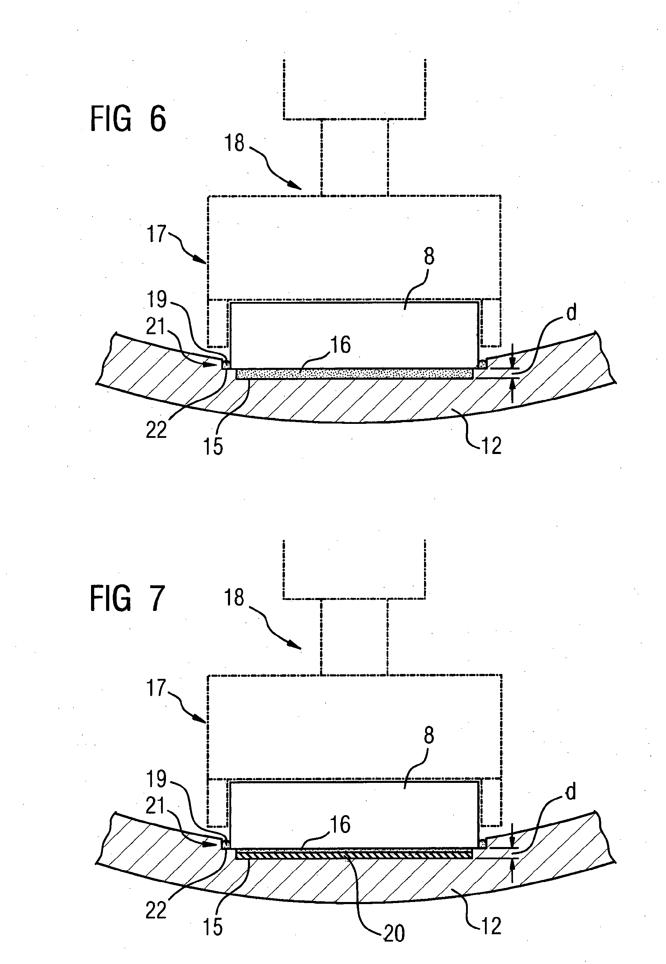

In FIG 6 ist in Form einer schematisierten Darstellung das Joch 12 und das Magnetelement 8 vergrößert dargestellt. Figur 6 bezieht sich dabei auf ein Beispiel, das nicht zur Erfindung gehört, aber die Erfindung besser verständlich macht. Das Joch 12 weist dabei an der Stelle, an der das Magnetelement 8 mit dem Joch verklebt wird, eine Ausnehmung 21 zur Aufnahme des Magnetelements 8 auf. Im Rahmen des Beispiels weist die Ausnehmung 21 dabei vorzugsweise zwei Stufen auf, die unterschiedlich tief in das Joch 12 eindringen, wobei die zweite Stufe 15 eine Dicke d aufweist. In die zweite Stufe 15 wird dabei im Rahmen des Beispiels beim Verkleben der zweite Klebstoff eingefüllt, bis er die zweite Stufe 15 vollständig ausfüllt und die solchermaßen entstandene Klebeschicht 16 vorzugsweise geringfügig dicker ist als die Dicke d der zweiten Stufe 15 der Ausnehmung 21. Anschließend wird zum Verkleben von einem Greifer 17 einer Ablegevorrichtung 18 das Magnetelement 8 auf die erste Stufe 22 der Ausnehmung 21 abgelegt. Die Breiten der ersten Stufe 22 und der zweiten Stufe 15 sind dabei derart ausgelegt, d.h. an die Ausmaße des Magnetelements 8 angepasst, dass das Magnetelement 8 auf der ersten Stufe 22 aufliegt. Beim Ablegen des Magnetelements 8 wird überschüssiger zweiter Klebstoff verdrängt und ordnet sich seitlich (Bezugselement 19) am Magnetelement 8 und am Joch 12 an. Durch die Wahl der Dicke d der zweiten Stufe 15 kann die Dicke des zweiten Klebstoffs, mit der das Magnetelements 8 mit dem Joch 12 verbunden ist, auf einfache Art und Weise festgelegt werden.

Nicht dargestellt in FIG 6 ist eine erfindungsgemäß in der Ausnehmung bereits im Vorfeld haftend aufgebrachte, weiche und elastische Schicht 20, die in der Ausnehmung 21 angeordnet ist. Die weiche und elastische Schicht 20 ist Bestandteil des Jochs 12.

Es sei an dieser Stelle angemerkt, dass die Ausnehmung 21 nicht unbedingt vorhanden sein muss. An der Stelle, an der das Magnetelement 8 mit dem Joch 12 verbunden werden soll, kann das Joch 12 z.B. auch mit dem zweiten Klebstoff beaufschlagt werden, und die Ablegevorrichtung 18 senkt anschließend das Magnetelement 8 so weit in den zweiten Klebstoff hinein, bis die gewünschte Dicke der Klebeschicht des zweiten Klebstoffs erreicht ist und hält dann das Magnetelement an dieser Position, bis der zweite Klebstoff ausgehärtet ist.

Weiterhin sei an dieser Stelle angemerkt, dass anstatt einer Stufe auch andere Abstandshalter möglich sind.

Der zweite Klebstoff umschließt die Permanentmagnete, welche in der Regel als Selten-Erd-Permanentmagnete ausgebildet sind, vollständig und gewährleistet somit eine sichere Schutzschicht, die die Permanentmagnete vor äußeren Umwelteinflüssen (Medien wie z.B. Flüssigkeiten oder Gase), die die Permanentmagnete beschädigen können, schützt.

In FIG 7 ist eine schematisierte Detailansicht eines Ausschnitts des erfindungsgemäßen Läufers mit einer Ablegevorrichtung für ein Magnetelement dargestellt. Gleiche Elemente sind in FIG 7 mit den gleichen Bezugszeichen versehen wie in FIG 6. Der einzige wesentliche Unterschied bei der Darstellung gemäß FIG 7 gegenüber FIG 6 besteht darin, dass die in der Ausnehmung bereits im Vorfeld haftend aufgebrachte, weiche und elastische Schicht 20 dargestellt ist, welche in der Ausnehmung 21 angeordnet ist. Die weiche und elastische Schicht 20 ist Bestandteil des Jochs 12. Die weiche und elastische Schicht 20 besteht dabei z.B. aus dem zweiten Klebstoff, der bereits ausgehärtet ist. Das Verkleben der Unterseite des Magnetelements 8 mit dem Joch 12 erfolgt dabei derart, dass vorzugsweise nur noch eine dünne Schicht des zweiten Klebstoffs auf die weiche und elastische Schicht 20 aufgebracht wird, was die Zeit bis zur Aushärtung der Klebeverbindung im allgemeinen verkürzt. Selbstverständlich kann aber auch eine dickere Schicht des zweiten Klebstoffs auf die weiche und elastische Schicht 20 aufgebracht werden.

Weiterhin kann das Magnetelement 8, auch ohne das Vorhandensein einer Ausnehmung 28 mit dem Joch 12 mittels des zweiten Klebstoffs verbunden werden.

Es sei an dieser Stelle angemerkt, dass selbstverständlich, falls erwünscht bei der Erfindung, das Joch 12 an den Stellen, an denen die Magnetelemente angebracht werden sollen, zur Realisierung einer ebenen Fläche, damit dort die Magnetelemente mit dem Jochs 12 besonders gut verklebt werden können, das Joch als Bestandteil des Jochs, einen mit einer ebenen Fläche versehenen Magnetelementträger als Anbauelement aufweisen kann, der mit einem weiteren Element des Jochs (z.B. mit den Blechen des Jochs), z.B. mittels einer Schraubverbindung oder einer formschlüssigen Verbindung, verbunden ist. Die Magnetelemente und insbesondere die Permanentmagnete sind dabei ausschließlich mittels des zweiten Klebstoffs am Magnetelementträger des Jochs und damit am Joch befestigt. An der erfindungsgemäßen Befestigung der Magnetelemente und insbesondere der Permanentmagnete am Magnetelementträger des Joch und damit am Joch sind somit keine form- und/oder kraftschlüssigen Verbindungen zur Realisierung der Befestigung beteiligt.

Weiterhin sei an dieser Stelle angemerkt, dass der Läufer, z.B. bei einer Ausbildung der Maschine als Linearmotor, auch eine translatorische Bewegung durchführen kann.

Die Maschine weist im Rahmen der Ausführungsbeispiele eine Leistung von größer als 10 kW und insbesondere größer als 1 MW auf. Gerade bei solchen relativ großen Maschinen ist wegen der großen Abstoßungs- und Anziehungskräfte der permanentmagnete die Herstellung eines Läufers nach der aus dem Stand der Technik bekannten Methode, die Verbindung der Magnetelemente mit dem Joch mittels kraft- und/oder formschlüssigen Verbindungen zu realisieren, aufwendig und teuer. Bei solchen relativ großen Maschinen ist deshalb die Erfindung besonders vorteilhaft.

## Patentansprüche

1. Verfahren zur Herstellung eines Läufers (14) für eine elektrische Maschine (13), mit folgenden Verfahrensschritten:
a) Herstellung eines Magnetelements (8) durch Aneinanderkleben von Permanentmagneten (1, 1', 1", 1"') mittels eines ersten Klebstoffs, wobei jeder Permanentmagnet (1, 1', 1", 1"') eine Seite (2) mit einem magnetischen Nordpol (N) und eine Seite (3) mit einem magnetischen Südpol (S) aufweist, wobei die Permanentmagnete (1, 1', 1", 1"') derart beim Verkleben angeordnet werden, dass die Seiten (2, 2', 2", 2"') der magnetischen Nordpole (N) oder die Seiten (3, 3', 3", 3"') der magnetischen Südpole (S) eine gemeinsame Unterseite (3, 3', 3", 3"') des Magnetelements (8) bilden, wobei der erste Klebstoff im ausgehärteten Zustand eine harte Konsistenz aufweist, welche verhindert, dass die Permanentmagnete (1, 1', 1", 1"') sich von einander wegbewegen können, und
b) Verkleben der Unterseite (3, 3', 3", 3"') des Magnetelements (8) mit einem Joch (12) mittels eines zweiten Klebstoffs, wobei der zweite Klebstoff im ausgehärtetem Zustand derart weich und elastisch ist, dass bei Temperaturerhöhung auftretende unterschiedliche Ausdehnungen des Magnetelements (8) und des Jochs (12) nicht zum Aufreißen des zweiten Klebstoffs führen,
wobei das Joch (12) an der Stelle, an der das Magnetelement (8) mit dem Joch (12) verklebt wird, eine weiche und elastische Schicht (20) aufweist.

2. Verfahren nach Anspruch 1,
**dadurch gekennzeichnet , dass** der erste Klebstoff ein schnell aushärtender Klebstoff ist.

3. Verfahren nach einem der vorherigen Ansprüche,
**dadurch gekennzeichnet, dass** der zweite Klebstoff als Silikon-Klebstoff ausgebildet ist.

4. Verfahren nach einem der vorherigen Ansprüche,
**dadurch gekennzeichnet, dass** die Dicke (d) der Klebeschicht zwischen Unterseite (3, 3', 3", 3"') des Magnetelements (8) und dem Joch (12) 0,4 mm bis 4 mm beträgt.

5. Verfahren nach einem der vorherigen Ansprüche,
**dadurch gekennzeichnet, dass** nach Durchführung des Verfahrensschritts a) eine Kappe (7) mittels des zweiten Klebstoffs mit der Oberseite (2, 2', 2", 2"') des Magnetelements (8) verklebt wird, wobei die Kappe (7) Seitenteile (24) aufweist, die mittels des zweiten Klebstoffs mit den Seitenflächen des Magnetelements (8) verklebt werden.

6. Verfahren nach einem der vorherigen Ansprüche,
**dadurch gekennzeichnet, dass** der Läufer (14) als Außenläufer ausgebildet ist und das Magnetelement (8) auf der Innenseite (23) des Jochs (12) angeordnet ist.

7. Verfahren nach einem der vorherigen Ansprüche,
**dadurch gekennzeichnet, dass** das Joch (12), an der Stelle, an der das Magnetelement (8) mit dem Joch (12) verklebt wird, eine Ausnehmung (21) zur Aufnahme des Magnetelements (8) aufweist

8. Verfahren nach Anspruch 8, **dadurch gekennz eichnet**, dass die Ausnehmung (21) mindestens zwei Stufen (15,22) aufweist.

9. Verfahren nach einem der vorherigen Ansprüche,
**dadurch gekennzeichnet, dass** der erste und der zweite Klebstoff bei Raumtemperatur aushärten.

10. Läufer für eine elektrische Maschine (13), wobei der Läufer (14) Magnetelemente (8) und ein Joch (12) aufweist, wobei die Magnetelemente (8) jeweilig Permanentmagnete (1, 1', 1", 1"') aufweisen, wobei jeder Permanentmagnet (1, 1', 1", 1"') eine Seite (2) mit einem magnetischen Nordpol (N) und eine Seite (3) mit einem magnetischen Südpol (S) aufweist, wobei die Permanentmagnete (1, 1', 1", 1"') eines Magnetelements (8) derart mittels eines ersten Klebstoff aneinandergeklebt sind, dass die Seiten (2, 2', 2", 2"') der magnetischen Nordpole (N) oder die Seiten (3, 3', 3", 3"') der magnetischen Südpole (S) eine gemeinsame Unterseite (3, 3', 3", 31"') des Magnetelements (8) bilden, wobei die Unterseite (3, 3', 3", 3"') der Magnetelemente (8) mittels eines zweiten Klebstoffs mit dem Joch (12) verklebt ist, wobei der zweite Klebstoff im ausgehärtetem Zustand derart weich und elastisch ist, dass bei Temperaturerhöhung auftretende unterschiedliche Ausdehnungen des Magnetelements (8) und des Jochs (12) nicht zum Aufreißen des zweiten Klebstoffs führen,
**dadurch gekennzeichnet, dass** der erste Klebstoff im ausgehärteten Zustand eine harte Konsistenz aufweist, welche verhindert, dass die Permanentmagnete (1, 1', 1", 1"') sich von einander wegbewegen können, wobei das Joch (12) an der Stelle, an der das Magnetelement (8) mit dem Joch (12) verklebt wird, eine weiche und elastische Schicht (20) aufweist.

11. Elektrische Maschine, wobei die elektrische Maschine (13) einen Läufer (14) nach Anspruch 10 aufweist.

12. Elektrische Maschine nach Anspruch 11, **dadurch gekennzeichnet, dass** die elektrische Maschine (13) als Generator oder Elektromotor ausgebildet ist.

13. Elektrische Maschine nach Anspruch 12, **dadurch gekennzeichnet, dass** der Generator als Windkraftgenerator ausgebildet ist.

## Claims

1. Method for manufacturing a rotor (14) for an electric machine (13), having the following method steps:
a) Manufacturing a magnetic element (8) by bonding permanent magnets (1, 1', 1", 1"') to one another by means of a first adhesive, wherein each permanent magnet (1, 1', 1", 1"') has a side (2) with a magnetic North pole (N) and a side (3) with a magnetic South pole (S), wherein the permanent magnets (1, 1', 1", 1"') are arranged during bonding such that the sides (2, 2', 2", 2"') of the magnetic North poles (N) or the sides (3, 3', 3", 3"') of the magnetic South poles (S) form a common underside (3, 3', 3", 3"') of the magnetic element (8), wherein the first adhesive has a hard consistency in the cured state, which prevents the permanent magnets (1, 1', 1", 1"') being able to move away from one another and
b) Bonding the underside (3, 3', 3", 3"') of the magnetic element (8) to a yoke (12) by means of a second adhesive, wherein the second adhesive is soft and elastic in the cured state, such that different extensions of the magnetic element (8) and the yoke (12) occurring during temperature increases do not lead to the tearing away of the second adhesive,
wherein the yoke (12), at the location at which the magnetic element (8) is bonded to the yoke (12), has a soft and elastic layer (20).

2. Method according to claim 1,
**characterised in that** the first adhesive is a fast-curing adhesive.

3. Method according to one of the preceding claims,
**characterised in that** the second adhesive is designed as a silicon adhesive.

4. Method according to one of the preceding claims,
**characterised in that** the thickness (d) of the adhesive layer between underside (3, 3', 3", 3"') of the magnetic element (8) and the yoke (12) is 0.4 mm to 4 mm.

5. Method according to one of the preceding claims,
**characterised in that**, after execution of method step a) a cap (7) is bonded by means of the second adhesive to the top side (2, 2', 2", 2"') of the magnetic element (8), wherein the cap (7) has side parts (24) which are bonded by means of the second adhesive to the side surfaces of the magnetic element (8).

6. Method according to one of the preceding claims,
**characterised in that** the rotor (14) is embodied as an external rotor and the magnetic element (8) is arranged on the inner side (23) of the yoke (12).

7. Method according to one of the preceding claims,
**characterised in that**, at the point at which the magnetic element (8) is bonded to the yoke (12), the yoke (12) has a recess (21) for receiving the magnetic element (8).

8. Method according to claim 8
**characterised in that** the recess (21) has at least two steps (15, 22).

9. Method according to one of the preceding claims,
**characterised in that** the first and the second adhesive cure at room temperature.

10. Rotor (14) for an electric machine (13), wherein the rotor (14) has magnetic elements (8) and a yoke (12), wherein the magnetic elements (8) each have permanent magnets (1, 1', 1", 1"'), wherein each permanent magnet (1, 1', 1", 1"') has a side (2) with a magnetic North pole (N) and a side (3) with a magnetic South pole (S), wherein the permanent magnets (1, 1', 1", 1"') of a magnetic element (8) are bonded to one another by means of a first adhesive such that the sides (2, 2', 2", 2"') of the magnetic North poles (N) or the sides (3, 3', 3", 3"') of the magnetic South poles (S) form a common underside (3, 3', 3", 3"') of the magnetic element (8), wherein the first adhesive has a hard consistency in the cured state, wherein the underside (3, 3', 3", 3"') of the magnetic elements (8) is bonded by means of a second adhesive to the yoke (12), wherein the second adhesive is soft and elastic in the cured state such that different extensions of the magnetic element (8) and the yoke (12) occurring during temperature increases do not lead to the tearing away of the second adhesive,
**characterised in that**
the first adhesive has a hard consistency in the cured state which prevents the permanent magnets (1, 1', 1", 1"') being able to move away from one another, wherein the yoke (12), at the point at which the magnetic element (8) is bonded to the yoke (12), has a soft and elastic layer (20).

11. Electric machine, wherein the electric machine (13) has a rotor (14) according to claim 10.

12. Electric machine according to claim 11,
**characterised in that** the electric machine (13) is embodied as a generator or electric motor.

13. Electric machine according to claim 12
**characterised in that** the generator is embodied as a wind-powered generator.

## Revendications

1. Procédé de fabrication d'un rotor ( 14 ) d'une machine ( 13 ) électrique ayant les stades de procédé suivantes :
a ) fabrication d'un élément ( 8 ) magnétique par collage les uns sur les autres d'aimants ( 1, 1', 1",1"' ) permanents au moyen d'une première colle, chaque aimant ( 1, 1', 1", 1"' ) comportant un côté ( 2 ) ayant un pôle ( N ) nord magnétique et un côté ( 3 ) ayant un pôle ( S ) sud magnétique, les aimants ( 1, 1', 1", 1"' ) permanents étant disposés, lors du collage, de manière à ce que les côtés ( 2, 2', 2", 2"' ) des pôles ( N ) nord magnétiques ou de manière à ce que les côtés ( 3, 3', 3", 3"' ) des pôles ( S ) sud magnétiques forment un côté ( 3, 3', 3", 3"' ) inférieur commun de l'élément ( 8 ) magnétique, la première colle ayant à l'état durci une consistance dure qui empêche que les aimants ( 1, 1', 1",1"' ) permanents puissent s'éloigner les uns des autres, et
b ) collage du côté ( 3, 3', 3", 3"' ) inférieur de l'élément ( 8 ) magnétique a une culasse ( 12 ) au moyen d'une deuxième colle, la deuxième colle étant, à l'état durci, tendre et élastique de manière à ce que des dilations différentes de l'élément ( 8 ) magnétique et de la culasse ( 12 ) apparaissant lors d'une élévation de la température ne donnent pas une déchirure de la deuxième colle,
la culasse ( 12 ) ayant à l'endroit où l'élément ( 8 ) magnétique est collé à la culasse ( 12 ) une couche ( 20 ) tendre et élastique.

2. Procédé suivant la revendication 1,
**caractérisé en ce que** la première colle est une colle à durcissement rapide.

3. Procédé suivant l'une des revendications précédentes,
**caractérisé en ce que** la deuxième colle est constituée sous la forme d'une colle en silicone.

4. Procédé suivant l'une des revendications précédentes,
**caractérisé en ce que** l'épaisseur de la couche de colle, entre le côté ( 3, 3', 3", 3"' ) inférieur de l'élément ( 8 ) magnétique et la culasse ( 12 ), va de 0,4 mm à 4 mm.

5. Procédé suivant l'une des revendications précédentes,
**caractérisé en ce qu'**après avoir effectué le stade a ) du procédé, on colle une coiffe ( 7 ) au moyen de la deuxième colle au côté ( 2, 2', 2", 2"' ) supérieur de l'élément ( 8 ) magnétique, la coiffe ( 7 ) ayant des parties ( 24 ) latérales qui sont collées au moyen de la deuxième colle aux faces latérales de l'élément ( 8 ) magnétique.

6. Procédé suivant l'une des revendications précédentes,
**caractérisé en ce que** le rotor ( 14 ) est constitué en rotor extérieur et l'élément ( 8 ) magnétique est disposé du côté ( 23 ) intérieur de la culasse ( 12 ).

7. Procédé suivant l'une des revendications précédentes,
**caractérisé en ce que** la culasse ( 12 ) a, à l'endroit où l'élément ( 8 ) magnétique est collé à la culasse ( 12 ), un évidemment ( 21 ) de réception de l'élément ( 8 ) magnétique.

8. Procédé suivant la revendication 7,
**caractérisé en ce que** l'évidemment ( 21 ) a au moins deux paliers ( 15, 22 ).

9. Procédé suivant l'une des revendications précédentes,
**caractérisé en ce que** la première et la deuxième colles durcissent à la température ambiante.

10. Rotor d'une machine ( 13 ) électrique, le rotor ( 14 ) ayant des éléments ( 18 ) magnétiques et une culasse ( 12 ), les éléments ( 8 ) magnétiques ayant des aimants ( 1, 1', 1", 1"' ) permanents, chaque aimant ( 1, 1', 1",1"' ) permanent comportant un côté ( 2 ) ayant un pôle ( N ) nord magnétique et un côté ( 3 ) ayant un pôle ( S ) sud magnétique, les aimants ( 1, 1', 1", 1"' ) permanents d'un élément ( 8 ) magnétique étant collés l'un à l'autre au moyen d'une première colle de manière à ce que les côtés ( 2, 2', 2", 2"' ) des pôles ( N ) nord magnétiques ou de manière à ce que les côtés ( 3, 3', 3", 3"' ) des pôles ( S ) sud magnétique forment un côté ( 3, 3', 3", 3"' ) inférieur commun de l'élément ( 8 ) magnétique, le côté ( 3, 3', 3", 3"' ) des éléments ( 8 ) magnétiques étant collés à la culasse ( 2 ) au moyen d'une deuxième colle, la deuxième colle étant à l'état durci tendre et élastique de manière à ce que des dilations différentes de l'élément ( 8 ) magnétiques et de la culasse ( 12 ) apparaissant lors d'une élévation de la température ne donnent pas une déchirure de la deuxième colle,
**caractérisé en ce que**
la première colla a, à l'état durci, une consistance dure qui empêche que les aimants ( 1, 1', 1", 1"' ) permanents puissent s'écarter les uns des autres, la culasse ( 12 ) ayant, à l'endroit où l'élément ( 8 ) magnétique est collé à la culasse ( 12 ), une couche ( 20 ) tendre et élastique.

11. Machine électrique dans laquelle la machine ( 13 ) électrique a un rotor ( 14 ) suivant la revendication 10.

12. Machine électrique suivant la revendication 11,
**caractérisée en ce que** la machine ( 13 ) électrique est constituée sous la forme d'une génératrice ou d'un moteur électrique.

13. Machine électrique suivant la revendication 12,
**caractérisée en ce que** la génératrice est constituée sous la forme d'une génératrice d'éolienne.
